# EUROPEAN PATENT APPLICATION

(11) **EP 2 367 124 A1**
(43) Date of publication of application: **21.09.2011**
(21) Application number: 11157666.6
(22) Date of filing: 10.03.2011
(51) Int. Cl.: G06F 17/30

(54) **Address database update apparatus and address database update method**

(30) Priority: 17.03.2010 JP 2010061539
(71) Applicant: Kabushiki Kaisha Toshiba, Tokyo 105-8001 (JP)
(72) Inventor: Hamamura, Tomoyuki, Tokyo 105-8001 (JP); Maeda, Masaya, Tokyo 105-8001 (JP); Irie, Bunpei, Tokyo 105-8001 (JP)
(74) Representative: Kramer - Barske - Schmidtchen

(57) **Abstract**

According to one embodiment, an update apparatus of an address database (19) includes an accumulation unit (31), a display unit (32), an unregistered data input unit (33), and an update unit (34). The accumulation unit (31) accumulates an image that includes pieces of information, which have been successfully settled halfway, and other pieces of information, which have failed to be settled, of full address information included in an image to be processed. The display unit (32) displays the image accumulated in the accumulation unit. The unregistered data input unit (33) inputs information of a part of address information which is not registered in the address database while the image is displayed on the display unit. The update unit (34) updates the address database by the information input by the unregistered data input unit.

## Description

### FIELD

Embodiments described herein relate generally to an address database update apparatus, and address database update method.

### BACKGROUND

Some sheet processing apparatuses execute sort processing of sheets such as mail items or forms that carry address information based on the address information. Such sheet processing apparatus reads an image of a sheet that carries address information, and applies character recognition to the read image. Then, the apparatus executes matching processing between the character recognition result and address information registered in an address database, thereby recognizing address information. For this reason, when the address database is flawed, the address information recognition accuracy of the sheet processing apparatus drops. Since the address information may change due to, for example, removal, the address database requires periodic maintenances. However, high cost is required to assemble the address database and to execute its update processing. For this reason, a method which allows to efficiently assemble and update the address database used in the sheet processing apparatus is demanded.

For example, Jpn. Pat. Appln. KOKAI Publication

No. 2007-41919 (patent reference 1) discloses the following technique. That is, character information carried on a mail item is recognized by character recognition processing, and the character recognition result is presented to an operator to cause the operator to determine whether or not the character recognition result is newly registered in the address database.

Also, Jpn. Pat. Appln. KOKAI Publication No. 2009-146393 (patent reference 2) discloses the following technique. That is, character information carried on a mail item is recognized by character recognition processing as in patent reference 1 above, and the address database is updated under various conditions using the character recognition result.

However, with both patent references 1 and 2, when the character recognition processing fails to correctly recognize a part which is not registered in the address database, the address database cannot be accurately updated. In general, it is difficult for handwritten address information to correctly recognize all characters of a portion which is not registered in the address database by the character recognition processing. The recognition accuracy for the handwritten address information is normally improved by a recognition method that executes post-processing using the address database or that which not only individually recognizes characters, but also selects words having highest scores in the address database by matching a character string obtained as the character recognition result with words included in address information of the address database. However, these recognition methods cannot be applied to patent references 1 and 2 above.

### BRIEF DESCRIPTION OF THE DRAWINGS

FIG. 1 is a schematic block diagram showing the arrangement of a sheet processing apparatus to which an address database update apparatus is applied;
FIG. 2 shows an example of a sheet to be processed;
FIG. 3 shows an example of an address database;
FIG. 4 shows examples of data accumulated in an accumulation unit;
FIG. 5 is a flowchart for explaining address database update processing;
FIG. 6 is a flowchart for explaining image accumulation processing in the accumulation unit;
FIG. 7 is a flowchart for explaining accumulated data update processing; and
FIG. 8 is a flowchart for explaining unregistered data registration processing.

### DETAILED DESCRIPTION

In general, according to one embodiment, an update apparatus of an address database (19), which stores address information, has an accumulation unit (31), a display unit (32), an unregistered data input unit (33), and an update unit (34). The accumulation unit accumulates an image that includes pieces of information, which have been successfully settled halfway, and other pieces of information, which have failed to be settled, of full address information included in an image to be processed. The display unit displays the image accumulated in the accumulation unit. The unregistered data input unit inputs partial information of address information, which is not registered in the address database, while the image is displayed on the display unit. The update unit updates the address database by the information input by the unregistered data input unit.

An embodiment will be described hereinafter with reference to the drawing.

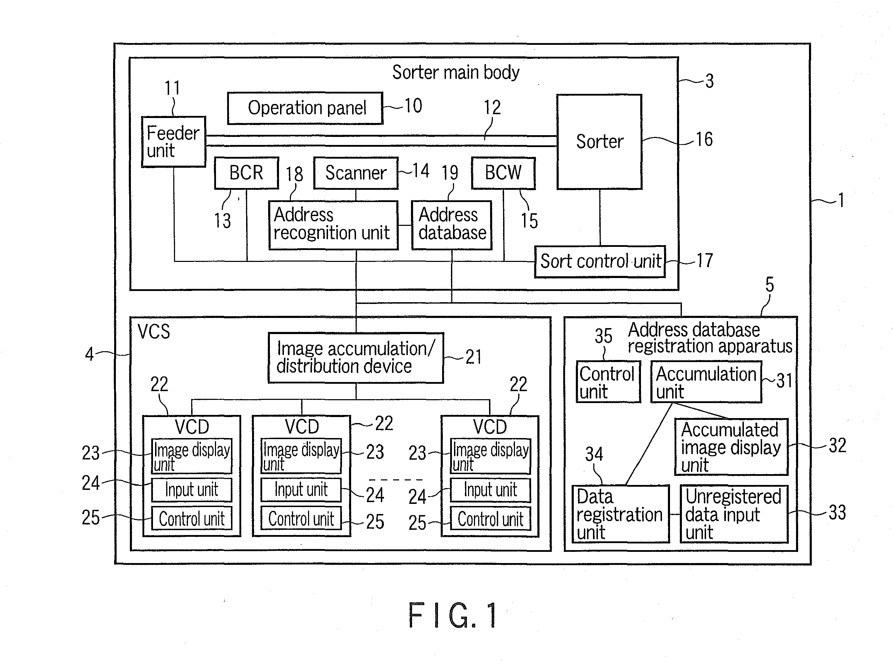

FIG. 1 shows an example of the schematic arrangement of a sheet processing apparatus according to an embodiment.

A sheet processing apparatus 1 recognizes address information carried on each of sheets such as mail items or forms, and sorts the sheets based on the recognition results. Referring to FIG. 1, the sheet processing apparatus 1 is configured by a sorter main body 3, video coding system (to be abbreviated as VCS hereinafter) 4, and address database registration apparatus 5. The sorter main body 3, VCS 4, and address database registration apparatus 5 are connected to be able to communicate with each other.

The sorter main body 3 of the sheet processing apparatus shown in FIG. 1 executes sort processing of sheets based on, for example, address information. The sorter main body 3 has an address recognition unit. The sorter main body 3 controls the address recognition unit to execute recognition processing of address information carried on each sheet with reference to address information stored in an address database. The VCS 4 of the sheet processing apparatus is a system which allows an operator to input address information of a sheet, address information of which has failed to be recognized in the sorter main body 3. The address database registration apparatus 5 of the sheet processing apparatus has a function as an address database update apparatus. The address database registration apparatus 5 updates the address database by additionally registering, for example, unregistered data of a portion which has failed to be recognized of address information in the sorter main body 3 or unregistered data included in address information input by the VCS 4.

The sorter main body 3 has an operation panel 10 on its front surface. The operation panel 10 allows an operator to designate a processing mode and to input a processing start instruction, and displays operation statuses of this apparatus.

The sorter main body 3 will be described first.

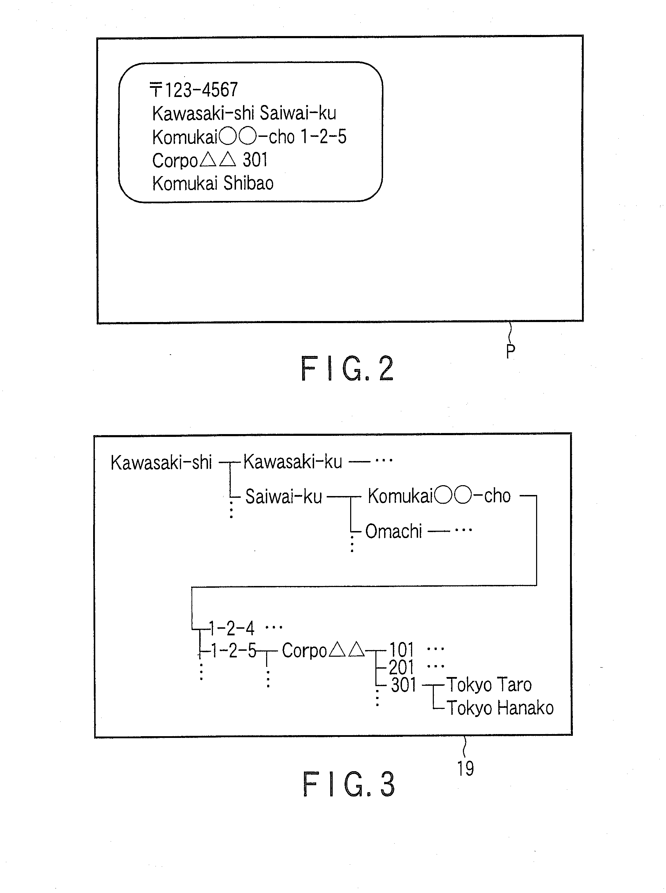

The sorter main body 3 has a feeder unit 11 which feeds sheets P. Sheets P stored in the feeder unit 11 are mail items each of which carries address information including pieces of character information such as a postal number, address, and name, as shown in, for example, FIG. 2. The feeder unit 11 feeds sheets P onto a main convey path 12 one by one at predetermined intervals.

Note that some sheets P to be fed by the feeder unit 11 carry destination barcodes indicating address information of the sheets P or ID barcodes as identification information assigned to sheets whose address information has failed to be recognized, in addition to the address information.

On the main convey path 12, a barcode reader (to be abbreviated as BCR hereinafter) 13, scanner 14, barcode writer (to be abbreviated as BCW hereinafter) 15, and sorter 16 are arranged. These units operate under the control of a sort control unit 17 according to processing statuses such as convey states of respective sheets.

The BCR 13 reads a barcode such as an ID barcode or destination barcode printed on a sheet conveyed on the main convey path 12. The BCR 13 has a reader unit for reading an image of a barcode, and a recognition unit for recognizing a barcode in the read image. The barcode recognition result by the BCR 13 is supplied to the sort control unit 17.

The scanner 14 optically reads an image of a sheet on the main convey path 12. The scanner 14 is connected to an address recognition unit 18 which recognizes character information as address information. The address recognition unit 18 extracts images of address information likely characters from an image read by the scanner 14, and recognizes the extracted character images as character candidates. The address recognition unit 18 decides the recognition result as address information based on the recognition results of address information likely characters and address information registered in an address database 19. The address recognition unit 18 supplies the recognition result of the address information to the sort control unit 17.

The BCW 15 prints an ID barcode or destination barcode on a sheet as needed. For example, the BCW 15 prints a destination barcode obtained by converting, into a barcode, the address information as the recognition result for a sheet whose address information has been successfully recognized by the address recognition unit 18. The BCW 15 prints an ID barcode obtained by converting, into a barcode, identification information (ID code) given from the sort control unit 17 for a sheet whose address information has failed to be recognized by the address recognition unit 18. That is, the BCW 15 prints, on a sheet whose address information has been successfully recognized, its recognition result as a destination barcode, and prints an ID barcode on a sheet whose address information has failed to be recognized.

That is, the destination barcode indicates destination information itself as an OCR recognition result, and the ID barcode indicates identification information used to identify a sheet of interest. The identification information of a sheet indicated by the ID barcode is information used to associate address information key-input at the VCS 4 with a sheet. In other words, sheets on which the ID barcodes are printed are those which are to be processed by the VCS 4.

On the downstream side of the BCW 15 in a sheet convey direction, the sorter 16 which sorts sheets according to address information is arranged. This sorter 16 is configured by a plurality of sort pockets (not shown) partitioned into a plurality of stages and a plurality of columns. The respective pockets are set in correspondence with sort destinations, and sheets are sequentially collected in the pockets corresponding to pieces of address information based on the pieces of address information or machine codes.

The sorter 16 has a VCS rejection pocket (not shown) which collects sheets whose sort destinations have failed to be recognized. After address information of each of sheets collected in this VCS rejection pocket is input by the VCS 4, these sheets are re-fed by the feeder unit 11, and are re-sorted based on the ID codes of these sheets and pieces of address information input by the VCS 4. The sort control unit 17 sorts sheets into the respective pockets of the sorter 16 based on pieces of address information as pieces of sort information.

The address database 19 stores pieces of address information to be recognized. In this embodiment, assume that each address information registered in the address database 19 is configured by data of a plurality of layers. FIG. 3 shows an example of the address database 19. The address database 19 stores all pieces of address information which exist in regions to be processed of sheets (for example, mail items) in a tree structure (hierarchical structure). The address database 19 can be updated by the address database registration apparatus 5. For example, the address database registration apparatus 5 can additionally register only lower layer information to address information registered in the address database 19. The address database 19 can be a storage device which is accessible by the address recognition unit 18. For example, the address database 19 may be arranged outside the sorter main body 3.

The VCS 4 will be described below.

The VCS 4 is configured by, for example, an image accumulation/distribution device 21 and a plurality of video coding discs (to be abbreviated as VCDs hereinafter) 22. The image accumulation/distribution device 21 and VCDs 22 can be implemented by, for example, a computer having a display unit, an input unit such as a keyboard, a control unit, and a storage unit.

The image accumulation/distribution device 21 executes processing for delivering an image of a sheet whose address information has failed to be recognized by the sorter main body 3 to each VCD 22, and returning a key input result of address information by each VCD 22 to the sorter main body 3. To the image accumulation/distribution device 21, the scanner 14, sort control unit 17, address recognition unit 18, and address database 19 in the sorter main body 3, and the address database registration apparatus 5 are connected.

The image accumulation/distribution device 21 stores an image of a sheet whose address information has failed to be recognized by the address recognition unit 18 in association with identification information (ID code) of that sheet. The image accumulation/distribution device 21 delivers the stored image of the sheet to each VCD 22 in accordance with operating statuses of the respective VCDs 22.

The VCD 22 has a display unit 23 as an image display unit, an input unit 24 as an address input unit, and a control unit 25. The display unit 23 includes a display device. The input unit 24 includes, for example, a keyboard and pointing device. The control unit 25 includes, for example, a CPU (processor) and memory. The control unit 25 controls the overall VCD 22, and has a function of controlling the respective units of the VCD 22. The control unit 25 implements various kinds of processing when the CPU executes programs stored in the memory. Also, the control unit 25 serves as a determination unit which determines, for example, input information.

To the VCD 22, an image of a sheet associated with identification information (ID code) of that sheet is distributed from the image accumulation/distribution device 21. The control unit 25 of the VCD 22 controls the image display unit 23 to display the image of the sheet distributed from the image accumulation/distribution device 21. In a state in which the image of the sheet is displayed, the control unit 25 of the VCD 22 allows an operator to input address information using the input unit 24. The control unit 25 of the VCD 22 returns the input result using the input unit 24 as input (settled) address information to the image accumulation/distribution device 21 in association with the identification information (ID code) of that sheet.

The image accumulation/distribution device 21 supplies the input result from the VCD 22 to the sort control unit 17 of the sorter main body 3 in association with the identification information (ID code) of that sheet. Then, the sort control unit 17 of the sorter main body 3 can acquire key-input address information based on an ID barcode assigned to a sheet.

The address database registration apparatus 5 will be described below.

The address database registration apparatus 5 has an accumulation unit 31, accumulated image display unit 32, unregistered data input unit 33, data registration unit 34, and control unit 35. The address database registration apparatus 5 is implemented by, for example, a computer having a display unit, control unit, storage unit, and keyboard.

The control unit 35 controls the overall address database registration apparatus 5. The control unit 35 includes, for example, a CPU (processor) and memory. The control unit 35 implements various kinds of processing when the CPU executes control programs stored in the memory.

The accumulation unit 31 includes a rewritable nonvolatile storage device such as an HDD. The accumulation unit 31 stores, for example, a part of address information recognized by the address recognition unit 18 and another part of the address information input by the VCS 4. For example, when a part of address information has been successfully recognized for an image read from a sheet, the accumulation unit 31 accumulates information of the successfully recognized part as a halfway settled address (settled information). If address information is configured by pieces of information of a plurality of layers, when the address recognition unit 18 has succeeded recognition up to halfway layers and has failed to recognize layers lower than the recognized layers, the accumulation unit 31 accumulates recognition results up to successfully recognized halfway layers as a halfway settled address (settled information).

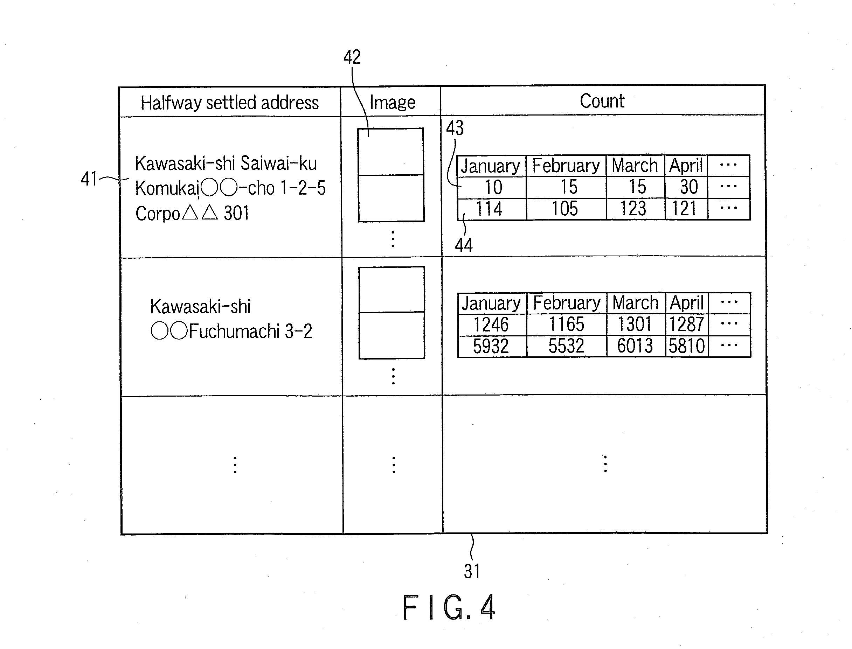

FIG. 4 shows an example of information stored in the accumulation unit 31. In the example shown in FIG. 4, the accumulation unit 31 stores a halfway settled address (settled information) 41, image 42, accumulation count (first accumulation count) 43, and accumulation count (second accumulation count) 44. The halfway settled address 41 is address information which has been successfully recognized up to halfway layers (address information in which those of lower layers have failed to be recognized). The image 42 is an image from which the halfway settled address 41 is obtained. The first accumulation count 43 indicates the number of times when the settled address 41 is obtained. The second accumulation count 44 indicates the number of times when lower layer information other than the halfway settled address 41 has also been successfully recognized. Each of the first and second accumulation counts 43 and 44 is a count counted for each month as a predetermined period.

In the example shown in FIG. 4, information up to "Kawasaki-shi Saiwai-ku Komukaioo-cho 1-2-5 CorpoΔΔ 301" is the successfully recognized (settled) halfway settled address (settled information) 41. The first accumulation count 43 indicates the number of times when "Kawasaki-shi Saiwai-ku Komukaioo-cho 1-2-5 CorpoΔΔ 301" is obtained as the halfway settled address 41. The second accumulation count 44 indicates the number of times when full address information including "Kawasaki-shi Saiwai-ku Komukaioo-cho 1-2-5 CorpoΔΔ 301" as the halfway settled address 41 (that is, full address information including the halfway settled address 41 and lower layer information such as a name) is obtained.

The accumulated image display unit 32 displays, for example, images of sheets accumulated in the accumulation unit 31. The accumulated image display unit 32 includes a display device, the display contents of which are controlled by the control unit 35. The unregistered data input unit 33 is used to input, for example, address information of a part which has failed to be recognized by the address recognition unit 18 in association with an image displayed on the accumulated image display unit 32. The unregistered data input unit 33 includes, for example, a keyboard. The data registration (update) unit 34 registers (updates) address information input by the unregistered data input unit 33 in the address database 19. The data registration unit 34 may be a function implemented when the CPU in the control unit 35 executes a program.

An example of the address database update processing according to this embodiment in the aforementioned arrangement will be described below.

The scanner 14 acquires an image including address information by optically reading a sheet (mail item or form) P which carries address information. FIG. 2 shows an example of the image acquired from the sheet P by the scanner 14.

The address recognition unit 18 applies character recognition to the image acquired by the scanner 14, and executes matching processing between the character recognition result and pieces of address information registered in the address database 19. Then, the address recognition unit 18 recognizes a character string in the image acquired by the scanner 14 as that of address information.

FIG. 3 shows an example of the address database 19. For example, when the address recognition unit 18 recognizes an address of the image shown in FIG. 2 using the address database 19 shown in FIG. 3, it successfully recognizes address information up to "Kawasaki-shi Saiwai-ku Komukaioo-cho 1-2-5 CorpoΔΔ 301". In the image shown in FIG. 2, since "Komukai Shibao" is included in a layer next to "301", it matches neither "Tokyo Taro" nor "Tokyo Hanako" as address information of the layer next to "301" in the address database 19 shown in FIG. 3. For this reason, the address recognition unit 18 fails to recognize address information of the layer below "301".

In this way, in case of a recognition result in which the address recognition unit 18 successfully recognizes information up to halfway layers but fails to recognize information of a lower layer other than the recognized layers, the accumulation unit 31 stores address information up to successfully recognized halfway layers as a halfway settled address. Also, the accumulation unit 31 stores a count obtained by counting the number of times when only the same halfway settled address is obtained (the number of times when recognition of a lower layer has failed) as the accumulation count (first accumulation count) 43.

Furthermore, the accumulation unit 31 stores, as the accumulation count (second accumulation count) 44, the number of times obtained when the same recognition result (halfway settled information) up to halfway layers has been recognized, and information of a lower layer has also been successfully recognized. That is, the accumulation unit 31 stores, as the first accumulation count 43, the number of times obtained when the same halfway settled information has been recognized, and information of a lower layer other than the halfway settled information has failed to be recognized, and stores, as the second accumulation count 44, the number of times obtained when the same halfway settled information has been recognized, and information of a lower layer other than the halfway settled information has been successfully recognized. Each of the first and second accumulation counts 43 and 44 is counted for each predetermined period (for example, a month), and is stored in the accumulation unit 31.

For example, in the example shown in FIG. 4, the accumulation unit 31 stores the halfway settled address 41, the image 42 to be recognized, the accumulation counts (first accumulation counts) 43 per month when only the halfway settled address has been successfully recognized, and the accumulation counts (second accumulation count) 44 per month when information of a lower layer other than the halfway settled address has been successfully recognized. The accumulation unit 31 stores pieces of information shown in FIG. 4 for all halfway settled addresses.

The control unit 35 of the address database registration apparatus 5 detects data which is not registered in the address database 19 from those accumulated in the accumulation unit 31. For example, in the example shown in FIG. 4, the first accumulation counts 43 (count values) of January to March range from 10 to 15, while the first accumulation count 43 (count value) of April is greatly increased to 30. This suggests a possibility of transfer of a new person to "Kawasaki-shi Saiwai-ku Komukaioo-cho 1-2-5 CorpoΔΔ 301" since April.

The control unit 35 has a detection function of detecting unregistered data candidates from information accumulated in the accumulation unit 31. Various methods can be applied to detection of unregistered data candidates. For example, the control unit 35 may detect unregistered data based on the value of the first accumulation count (the number of times when a lower layer has failed to be recognized) 43. Alternatively, the control unit 35 may detect unregistered data based on a ratio of the value of the first accumulation count (the number of times when a lower layer has failed to be recognized) and that of the second accumulation count (the number of times when a lower layer has also been successfully recognized) in place of the value itself of the first accumulation count. Also, the control unit 35 may use the first accumulation count or a ratio of the first and second accumulation counts during a predetermined total period (for example, one year) in place of only a monthly change.

When unregistered data is detected, the control unit 35 reads out the corresponding image from the accumulation unit 31, and displays it on the accumulated image display unit 32. The control unit 35 may display a plurality of images which are detected as unregistered data and have halfway settled addresses on the display unit 32. An operator confirms the presence of data which is not registered in the address database 19 by checking the plurality of images displayed on the display unit 32 as unregistered data.

The operator who confirmed unregistered data inputs data (unregistered data) to be registered (updated) in the address database 19 using the unregistered data input unit 33. The data registration unit 34 registers the unregistered data input using the unregistered data input unit 33 as address information of a lower layer of the halfway settled address in the address database 19.

As described above, the address database registration apparatus as the address database update apparatus has the accumulation unit, display unit, input unit, registration unit, and control unit. The accumulation unit stores an image for which recognition of a part of address information has succeeded but that of the remaining part has failed in association with a recognition result (halfway settled information). The control unit detects an image whose address information is more likely to include unregistered data from those accumulated in the accumulation unit, and displays it on the display unit at a predetermined timing. When information that has failed to be recognized (unregistered data) is input by the unregistered data input unit while the detected image is displayed on the display unit, the registration unit registers (updates) the unregistered data in the address database. In this way, the address database registration apparatus can efficiently assemble and update the address database used in address recognition.

The sequence of the address database update processing according to this embodiment will be described below.

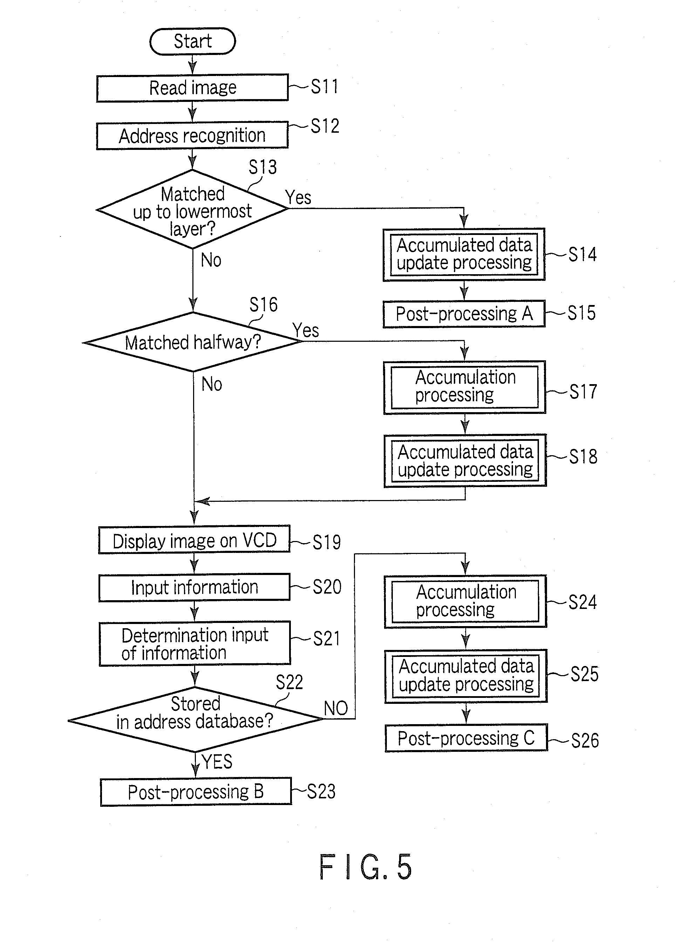

FIG. 5 is a flowchart for explaining the update processing of the address database 19 in the sheet processing apparatus.

In the sorter main body 3, when a sheet is conveyed along the convey path 12 to an image reading position of the scanner 14, the scanner 14 reads an image of the sheet conveyed along the convey path 12 (step S11). When the image of the sheet is acquired by the scanner 14, the address recognition unit 18 applies address recognition to the image read by the scanner 14 using the address database 19 (step S12).

The address recognition unit 18 applies character recognition to an address information likely region of the image read by the scanner 14. The address recognition unit 18 executes matching processing between pieces of information obtained as character recognition results with address information stored in the tree structure in the address database 19. The address recognition unit 18 evaluates as a result of the matching processing whether or not the character recognition results match up to lowermost layer information of address information in the address database 19 (step S13).

If it is determined as a result of this evaluation that the character recognition results match up to the lowermost layer (YES in step S13), the address recognition unit 18 determines that recognition of all the layers of address information has succeeded, and outputs the recognition result to the address database registration apparatus 5. The control unit 35 of the address database registration apparatus 5 executes update processing of accumulated data for the accumulation unit 31 using full address information as the recognition result acquired from the address recognition unit 18 (step S14). Details of the accumulated data update processing in step S14 will be described later.

Upon completion of the accumulated data update processing in step S14, the address recognition unit 18 sends the successful recognition result of the full address information to the sort control unit 17. The sort control unit 17 executes processing (post-processing A) when the full address information has been successfully recognized for an object based on the recognition result from the address recognition unit 18 (step S15). For example, if an object to be processed is a mail item, the sort control unit 17 executes, as post-processing A, processing for sorting that mail item into a sort pocket corresponding to the address information based on the full address information as the recognition result of the address recognition unit 18.

As a result of evaluation in step S13, if it is determined that the character recognition results do not match up to the lowermost layer (NO in step S13), the address recognition unit 18 checks whether or not the character recognition results in step S12 match halfway layers of the address information in the address database, but do not match their lower layers (step S16).

If it is determined that the character recognition results match halfway layers but do not match their lower layers (YES in step S16), the address recognition unit 18 outputs the recognition result to the address database registration apparatus 5. The control unit 35 of the address database registration apparatus determines that the lower layer information which is not settled (which does not match the address information in the address database) in the recognition result received from the address recognition unit 18 is likely to be information which is not registered in the address database 19, and executes accumulation processing for storing (accumulating) the image of that sheet in the accumulation unit 31 of the address database registration apparatus 5 (step S17). Details of the accumulation processing in step S17 will be described later.

Upon completion of the accumulation processing in step S17, the control unit 35 executes update processing of accumulated data for the accumulation unit 31 of the address database registration apparatus 5 (step S18). Details of the accumulated data update processing in step S18 will be described later.

As a result of checking in step S16, if pieces of information up to halfway layers are not matched, that is, if it is determined that it is impossible to recognize address information, the address recognition unit 18 determines that address information likely information has failed to be recognized, and sends the image of the sheet whose address information has failed to be recognized to the VCS 4 in association with an ID code of that sheet. Then, the process advances to step S19. Also, if it is determined that halfway layers are matched but their lower layers are not matched (YES in step S16), the address recognition unit 18 of the sorter main body 3 outputs the image of the sheet and recognition result to the VCS 4, and the process advances to step S19.

In the VCS 4, the image accumulation/distribution device 21 accumulates the image which is supplied from the sorter main body 3 (address recognition unit 18) and the address information of which has failed to be recognized. The image accumulation/distribution device 21 distributes the accumulated image to each VCD 22. The control unit 25 of the VCD 22 which received the image from the image accumulation/distribution device 21 displays the received image on the image display unit 23. At the VCD 22 which displays the image, an operator inputs address information using the input unit 24 while viewing the image displayed on the image display unit 23 (step S20).

For example, when an object to be processed is a mail item, the operator inputs at least some pieces of information of upper layers (for example, a postal code, and an area number, block number, and house number in address information, which can be input as numerals) in address information using the input unit 24. The control unit 25 collates at least some pieces of information (for example, those of upper layers) of the address information input by the operator using the input unit 24 in step S20 with pieces of address information stored in the address database 19. The control unit 25 lists up lower layer information (for example, name information indicating a receiver) that follows the information input by the operator from pieces of address information stored in the address database 19. The control unit 25 displays pieces of listed-up information (for example, a list of names of receivers) on the image display unit 23 as a list.

In this case, the operator selects the lower layer information (for example, a name as a receiver) that follows the information input by himself or herself from the list displayed on the image display unit 23 using the input unit 24 (step S21). However, when the list displayed on the image display unit 23 does not include any information (for example, a name) which matches the lower layer information that follows the input address information, the operator inputs a message that the lower layer information is not included in the address information of the address database 19 using the input unit 24.

In the VCD 22, the control unit 25 determines based on the determination result input by the operator in step S21 whether or not the lower layer information is included in the list (that is, whether or not the lower layer information that follows the input address information is stored in the address database 19) (step S22).

As a result of this determination, if it is determined that the lower layer information is included in the list (stored in the address database) (YES in step S22), the VCD 22 executes processing (post-processing B) when the address information of the object can be clarified (step S23). For example, when an object to be processed is a mail item, the VCD 22 executes processing for storing the information indicating the object of the image and full address information including the information selected from the list in the image accumulation/distribution device 21 as a set in association with each other, and returning the information to the sorter main body 3 via the image accumulation/distribution device 21.

Note that if it is determined that the lower layer information is included in the list (stored in the address database 19) (YES in step S22), the VCD 22 (or the control unit 35 which received information from the VCD 22) may execute accumulated data update processing for the accumulation unit 31 of the address database registration apparatus 5 as in step S14 above.

As a result of determination in step S22, if the lower layer information is not included in the list, that is, if the lower layer information (for example, a name) in the input address information is not stored (not registered) in the address database 19, the VCD 22 (or the control unit 35 which received the address information including unregistered data from the VCD 22) executes accumulation processing in the accumulation unit 31 of the address database registration apparatus 5 (step S24). Details of the accumulation processing in step S24 will be described later. Also, upon completion of the accumulation processing in step S24, the VCD 22 executes accumulated data update processing for the accumulation unit 31 of the address database registration apparatus 5 (step S25). The process then advances to step S26. Details of the accumulated data update processing in step S25 will be described later.

Note that as step S26, the sheet processing apparatus 1 executes processing (post-processing C)
when address information has failed to be specified for an object. For example, when an object to be processed is a mail item, the VCD 22 outputs a message indicating that an address of the mail item is unknown (it is impossible to identify address information) to the sorter main body 3. Thus, the sorter main body 3 executes sort processing of that mail item as an address unknown mail item.

The accumulation processing in steps S17 and S24 will be described below.

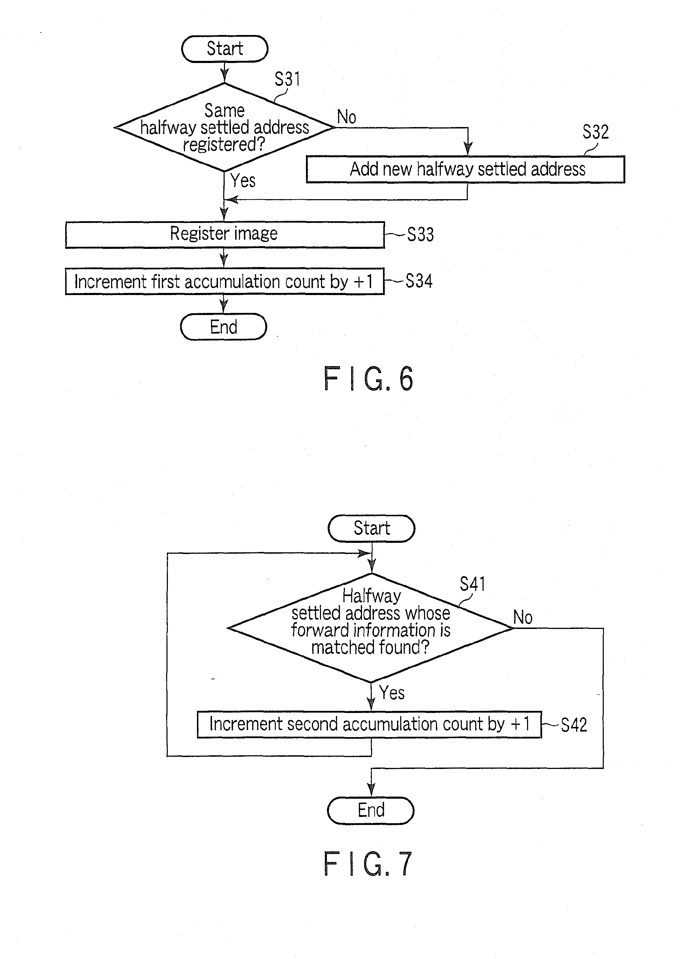

FIG. 6 is a flowchart for explaining the accumulation processing in steps S17 and S24. Note that the address database registration apparatus 5 which received a halfway settled address from the sorter main body 3 or VCS 4 executes the accumulation processing in steps S17 and S24, as shown in FIG. 6.

Upon reception of a halfway settled address in which pieces of information up to halfway layers have been settled but lower layer information has not been settled, the control unit 35 determines whether or not the same halfway settled address is registered in the accumulation unit 31 (step S31). As a result of this determination, if it is determined that no halfway settled address is registered (NO in step S31), the control unit 35 newly and additionally registers that halfway settled address (the halfway settled address 41 shown in FIG. 4) in the accumulation unit 31 (step S32).

Upon completion of additional registration of the new halfway settled address in step S32, or if it is determined as a result of determination in step S31 that the halfway settled address is already registered (YES in step S31), the control unit 35 registers the image (the image 42 shown in FIG. 4) in the accumulation unit 31 in association with the halfway settled address (step S33). Also, the control unit 35 increments the first accumulation count (the accumulation count 43 shown in FIG. 4) by "+1" in association with the halfway settled address 41 (step S34), thus ending the accumulation processing.

The accumulated data update processing in steps S14, S18, and S25 will be described below.

FIG. 7 is a flowchart for explaining the accumulated data update processing in steps S14, S18, and S25. Note that the address database registration apparatus 5 which received the halfway settled address from the sorter main body 3 or VCS 4 executes the accumulated data update processing in steps S14, S18, and S25, as shown in FIG. 7.

The control unit 35 conducts a prefix search for a halfway settled address that matches pieces of forward information (upper layers) (step S41). For example, in case of the aforementioned example, when the recognition result matches up to "Kawasaki-shi Saiwai-ku Komukaioo-cho 1-2-5", and subsequent pieces of lower layer information are failed to be recognized, the control unit 35 finds halfway settled addresses "Kawasaki-shi", "Kawasaki-shi Saiwai-ku", "Kawasaki-shi Saiwai-ku Komukaioo-cho", and so forth.

As a result of the prefix search in step S41, if a halfway settled address is found (YES in step S41), the control unit 35 increments the second accumulation count 44 (see FIG. 4) corresponding to the found halfway settled address by "+1" (step S42), and the process returns to step S41 to continue to conduct a prefix search for another halfway settled address. As a result of prefix search in step S41, if no halfway settled address is found (NO in step S41), the control unit 35 ends the accumulated data update processing for the accumulation unit 31.

The unregistered data registration processing as the update processing of the address database 19 in the address database registration apparatus 5 will be described below.

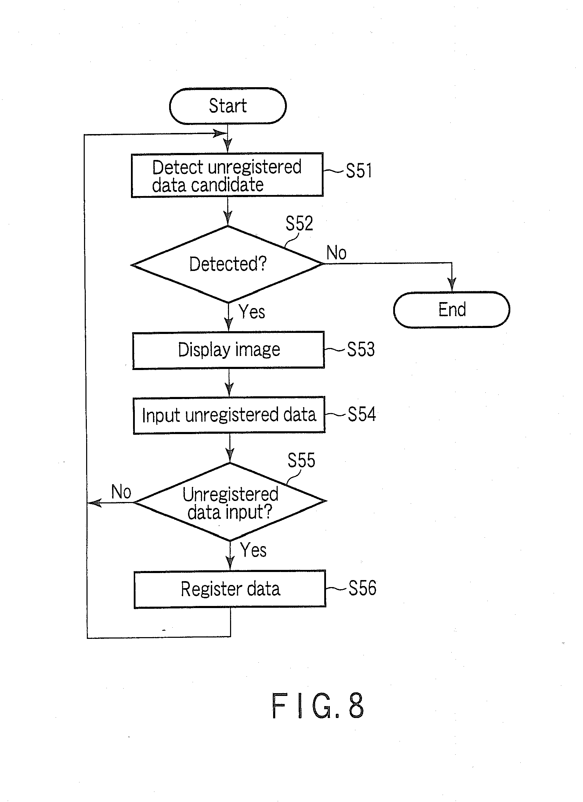

FIG. 8 is a flowchart for explaining the unregistered data registration processing.

The control unit 35 detects an image which is more likely to represent unregistered data (to be referred to as an unregistered data candidate hereinafter) from those in the accumulation unit 31 (step S51). Various detection methods of unregistered data candidates may be used.

For example, the control unit 35 may detect, as an unregistered data candidate, data whose value of the first accumulation count (for example, the first accumulation count 43 shown in FIG. 4) when only the halfway settled address has been successfully recognized is larger than a predetermined threshold. Alternatively, the control unit 35 may detect, as an unregistered data candidate, data whose ratio of the first accumulation count when only the halfway settled address has been successfully recognized and the second accumulation count (the second accumulation count 44 shown in FIG. 4) when full address information including the halfway settled address has been successfully recognized is larger than a predetermined threshold.

Alternatively, the control unit 35 may detect, as an unregistered data candidate, data whose value of the first accumulation count or of a ratio of the first and second accumulation counts is larger than the predetermined threshold in a specific month. Furthermore, the control unit 35 may detect, as an unregistered data candidate, data whose increment from the previous month is larger than a predetermined threshold.

Also, the control unit 35 may detect, as unregistered data candidate detection results, the predetermined number of (for example, n) top-ranked data in turn. In this case, the control unit 35 selects, for example, data having top n first accumulation counts (or ratios of the first and second accumulation counts) in turn. Alternatively, the control unit 35 may select data having top n first accumulation counts (or ratios of the first and second accumulation counts) which are greater than or equal to a predetermined threshold. Each of the aforementioned thresholds may be common to all data, or may be independently set for each layer of address information. Furthermore, each threshold may be independently set for each halfway settled address.

As for the image registered in step S24 shown in FIG. 5, the operator confirms that address information in that image (that of an object) includes address information which is not stored in the address database 19. By contrast, as for the image registered in step S17 shown in FIG. 5, it is determined from the recognition result of the address recognition unit 18 that address information in that image (that of an object) includes address information which is not stored in the address database 19.

In consideration of a possibility of recognition errors in the address recognition processing by the address recognition unit 18, it can be estimated that the image saved in the accumulation unit 31 in step S24 is more likely to include unregistered data compared to the image saved in the accumulation unit 31 in step S17. That is, the first and second accumulation counts of the image saved in step S24 and that saved in step S17 may be independently counted (stored) in the accumulation unit 31, and the control unit 35 may preferentially detect the image saved in step S24 as an unregistered data candidate.

If no image which is more likely to represent unregistered data is detected in step S51 (NO in step S52), the control unit 35 ends the unregistered data registration processing. If an image which is more likely to represent unregistered data is detected in step S51 (YES in step S52), the control unit 35 reads out the determined image which is more likely to represent unregistered data from the accumulation unit 31, and displays it on the accumulated image display unit 32 (step S53). In this case, the control unit 35 may read out a plurality of images saved in association with the same halfway settled address, and the accumulated image display unit 32 may display the plurality of images on a single screen. Alternatively, the control unit 35 may switch the image displayed on the accumulated image display unit 32 to another image associated with the same halfway settled address in response to an operator's operation.

While the determined image which is more likely to represent unregistered data on the accumulated image display unit 32, the control unit 35 accepts an input of unregistered data to be registered in the address database 19 via the unregistered data input unit 33 (step S54). For example, the operator decides unregistered data to be registered in the address database 19 by visually checking the image displayed on the accumulated image display unit 32. The operator who determines the presence of unregistered data inputs the unregistered data to be registered in the address database 19 using the unregistered data input unit 33. The operator who determines the absence of unregistered data inputs a message indicating the absence of unregistered data to be registered in the address database 19 using the unregistered data input unit 33.

If no unregistered data is input to the unregistered data input unit 33 (NO in step S55), the control unit 35 controls the process to return to step S51. If unregistered data is input to the unregistered data input unit 33 (YES in step S55), the control unit 35 controls the data registration unit 34 to register, in the address database 19, the input unregistered data as address information of a lower layer which follows the halfway settled information in the address database 19 (step S56). The control unit 35 repetitively executes the aforementioned processing until all unregistered data candidates are processed.

Note that in the aforementioned embodiment, as the accumulation processing for accumulating images whose halfway settled addresses alone have been settled in the accumulation unit 31, the accumulation processing for accumulating images of halfway settled addresses obtained from the processing results of each VCD 22 (step S24) and that for accumulating images of halfway settled addresses obtained from the processing results of the address recognition unit 18 (step S17) are executed.

However, both of the accumulation processing for accumulating images of halfway settled addresses obtained from the processing results of each VCD 22 and that for accumulating images of halfway settled addresses obtained from the processing results of the address recognition unit 18 need not always be executed. That is, the accumulation unit 31 may be updated by either one of the accumulation processing for accumulating images of halfway settled addresses obtained from the processing results of each VCD 22 and that for accumulating images of halfway settled addresses obtained from the processing results of the address recognition unit 18.

For example, the processing when the accumulation processing for accumulating images of halfway settled addresses obtained from the processing results of each VCD 22 is skipped can be implemented by omitting the processes in steps S24 and S25 in the flowchart shown in FIG. 5. In this case, unregistered data candidates are detected from images of halfway settled addresses, which are obtained form the processing results of the address recognition unit 18 and are accumulated in the accumulation unit 31.

Also, the processing when the accumulation processing for accumulating images of halfway settled addresses obtained from the processing results of the address recognition unit 18 is skipped can be implemented by omitting the processes in steps S16, S17, and S18 in the flowchart shown in FIG. 5. In this case, unregistered data candidates are detected from images of halfway settled addresses, which are obtained from the processing results of each VCD 22 and are accumulated in the accumulation unit 31.

In the process in step S16 of the flowchart shown in FIG. 5, conditions required to determine whether or not the recognition results match up to halfway layers of address information in the address database may be further restricted. For example, when layers before a name included in address information are successfully recognized, and only the name is failed to be recognized, the control unit 35 may determine halfway matching. Also, in step S20, since the operator inputs information, accurate information can be obtained. For this reason, in the flowchart shown in FIG. 5, even if YES is determined in step S16, the process may directly advance to step S19 in place of step S17.

Furthermore, steps S20 and S21 of the flowchart shown in FIG. 5 may also allow to determine whether or not data other than a name are address information stored in the address database 19. In this case, conditions required to allow the process to advance from step S16 to step S17 may be further narrowed down.

The aforementioned embodiment has explained the case in which the address database registration apparatus 5 forms a set with the sorter main body 3. However, the sorter main body 3 and the address database registration apparatus 5 need not always form a set, but they may be installed at remote places. That is, the address database registration apparatus 5 and the address recognition unit 18 of the sorter main body 3 need only access the address database 19. For example, the address database registration apparatus 5 may be configured to be connected to the sorter main body 3 (or the address database 19) via a network. Furthermore, the single address database registration apparatus 5 may be configured to be connected to a plurality of sorter main bodies 3 or a plurality of address databases 19.

The aforementioned embodiment has to provide an address database update apparatus and address database update method, which can efficiently update an address database.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An update apparatus for an address database (19) which stores address information, comprising:
an accumulation unit (31) adapted to accumulate an image that includes pieces of information, which have been successfully settled halfway, and other pieces of information, which have failed to be settled, of full address information included in an image to be processed;
a display unit (32) adapted to display the image accumulated in the accumulation unit;
an unregistered data input unit (33) adapted to input information of a part of address information which is not registered in the address database while the image is displayed on the display unit; and
an update unit (34) adapted to update the address database by the information input by the unregistered data input unit.

2. The apparatus according to claim 1;
**characterized by** further comprising:
an address recognition unit (18) adapted to apply character recognition to an image to be processed which includes address information, and to recognize address information included in the image by matching results of the character recognition with the address information registered in the address database, and
wherein the accumulation unit is adapted to accumulate an image which allows the address recognition unit to recognize information of a part of the address information included in the image to be processed and does not allow the address recognition unit to recognize the remaining information, and
the unregistered data input unit is adapted to input information of the part that does not allow the address recognition unit to recognize the address information included in the image accumulated in the accumulation unit.

3. The apparatus according to claim 1 or 2, **characterized in that** the accumulation unit is adapted to store the pieces of information, which have been successfully settled halfway, of full address information included in the image as settled information in association with the image.

4. The apparatus according to claim 2 or 3, **characterized by** further comprising.
an address input unit (24) adapted to input address information included in an image for which address recognition by the address recognition unit has failed; and
a determination unit (25) adapted to determine whether or not the address information input by the address input unit includes information which is not registered in the address database, and
wherein the accumulation unit is adapted to accumulate an image which is determined by the determination unit that the address information input by the address input unit includes information which is not registered in the address database.

5. The apparatus according to claim 4, **characterized in that** information of a part, which is registered in the address database, of the address information input by the address input unit is stored in the accumulation unit as settled information in association with the image.

6. The apparatus according to any one of claims 1 to 5, **characterized in that** the update unit is connected to the address database via a network.

7. The apparatus according to claim 3 or 5, **characterized in that** the accumulation unit is also adapted to store an accumulation count of the settled information.

8. The apparatus according to claim 7, **characterized in that** the accumulation unit is adapted to store the accumulation count of the settled information for each predetermined period.

9. The apparatus according to claim 7 or 8, **characterized in that** the accumulation unit is also adapted to store an accumulation count when another part has been successfully recognized as well as the settled information.

10. The apparatus according to any one of claims 7 to 9, **characterized in that** the display unit is adapted to display an image corresponding to settled information in which the accumulation count is maximum or exceeds a predetermined threshold.

11. The apparatus according to claim 10, **characterized in that** the display unit is adapted to display an image corresponding to settled information in which a ratio of the accumulation count of the settled information and the accumulation count when another part has been successfully recognized as well as the settled information is maximum or exceeds a predetermined threshold.

12. The apparatus according to claim 11, **characterized in that in that** the display unit is adapted to display an image corresponding to settled information in which a degree of increment from a previous period exceeds a predetermined threshold in association with the ratio of the accumulation count of the settled information and the accumulation count when another part has been successfully recognized as well as the settled information.

13. The apparatus according to any one of claims 7 to 12, **characterized in that** the display unit is adapted to simultaneously display a plurality of images having the same settled information.

14. An update method for an address database which stores address information, **characterized by** comprising:
saving, in an storage device, an image that includes pieces of information, which have been successfully settled halfway, and other pieces of information, which have failed to be settled, of full address information included in an image to be processed (S17, S24);
displaying the image saved in the storage device on a display unit (S53);
inputting information of a part of address information which is not registered in the address database while the image is displayed on the display unit (S54); and
updating the address database by the input information (S56).
